# EUROPEAN PATENT SPECIFICATION

(11) **EP 4 238 020 B1**
(45) Date of publication and mention of the grant of the patent: **03.12.2025**
(21) Application number: 21798807.0
(22) Date of filing: 27.10.2021
(51) Int. Cl.: G06Q 10/06, G06Q 10/08, G06Q 10/02

(54) **SYSTEM AND METHOD FOR MANAGING USER QUEUES**
SYSTEM UND VERFAHREN ZUR VERWALTUNG VON BENUTZERWARTESCHLANGEN
SYSTÈME ET PROCÉDÉ DE GESTION DE FILES D'ATTENTE D'UTILISATEURS

(30) Priority: 28.10.2020 IT 202000025522
(43) Date of publication of application: 06.09.2023
(73) Proprietor: Centenaro, Nicola, 31057 Silea (TV) (IT)
(72) Inventor: Centenaro, Nicola, 31057 Silea (TV) (IT)
(74) Representative: Dragotti & Associati S.P.A.
(86) International application number: PCT/IB2021/059914
(87) International publication number: WO 2022/090950

(56) References cited:
- EP-A1- 2 806 407
- US-A1- 2016 055 429
- US-B2- 7 628 320

## Description

The present invention relates to an innovative system and to a method for managing user queues.

In the present art systems for managing queues are known where a progressive number is assigned to each user upon arrival in a queue. A special electronic board shows the number being served at a particular moment, this number being increased by one unit by the serving staff whenever they finish serving a user in the queue.

These solutions for managing queues are used in different types of activity (e.g. food shops, delicatessen counters, chemists, fast food outlets, service counters, etc.) where it is required to form and manage an orderly queue of users.

A first simple version of these systems is one where the board which shows the number being served is a simple numerical display controlled by an incremental pushbutton which is pressed by the staff serving the users in the queue. The sequential numbers are furthermore assigned to the users by means of a ticket dispenser formed by a simple container which has inside it a rolled-up pre-printed strip of tickets numbered in sequence. With each dispensing operation the first ticket in the strip is thus detached and taken by the user.

Usually dispensing is performed manually by the user who presses a special lever or simply pulls a projecting piece of the ticket in order to detach it from the strip.

This version of the system is obviously very low-cost and easy to manage (the ticket roll merely needs to be changed once it has been used up), but is not very flexible in terms of use.

In a more sophisticated version of these systems, a special computerized dispenser is used, said dispenser being provided with a monitor for selecting the dispensing operation and a printer which directly prints the ticket with the sequential number when it is required. The board which shows the number being served may be more sophisticated, forming part of a relatively complex computerized system for providing information. For example, owing to the electronic management of the ticket dispensing operation it is possible to determine which numbers have already been dispensed and not yet served and therefore show on the board (often consisting of an alphanumeric monitor) the number of users in a queue, also arranged in order for the service required. It is also possible to memorize in the system statistical information, such as the number of users in a queue during the various time bands or the type of service which is most requested, etc. These systems, even though they offer a greater flexibility compared to the simpler systems, are however relatively more expensive and require more extensive management and maintenance.

The simpler systems, with a paper roll and numerical display, are in any case those which are still more widely used, both because of their low cost and because historically they were the first systems to be used for the management of an orderly queue of users.

On the other hand, the more modern computerized management systems mentioned above would be able to provide a degree of flexibility and additional useful functions both for the user and for the person managing the service associated with the queue, but the costs involved for replacing the old systems and for their subsequent management and maintenance are a dissuading factor when it comes to replacing them.

US2016/055429 discloses a virtual queue management system for an amusement park for booking the attractions. US7628320 discloses a system for interacting with an object on which there is encoded data and which is imaged by a camera. EP2806407A1 discloses an online information system for smart phones, PC or other electronic devices, for the counting of the turn number in rows.

The general object of the present invention is to provide a system for managing queues which is able to provide good flexibility in terms of use, but with relatively low installation and management costs, also for example in the case where a simple system with display and possible paper roll is already present. A further object is also to provide an innovative method for managing queues.

In view of this object the idea which has occurred is to provide, according to the invention, a system for managing user queues according claim 1 and comprising a served number sensor intended for the acquisition of a number shown on a display and representing the number served in the queue, the served number sensor being suitable for producing digital data corresponding to such number; a control unit connected to the served number sensor in order to receive the digital data and suitable for sending such digital data to portable devices of the users.

Furthermore, the idea which has occurred is to provide, according to the invention, a method for managing user queues according claim 11 and comprising the steps of: providing a served number sensor which acquires a number shown on a display and representing the number served in the queue, the served number sensor being suitable for producing digital data corresponding to such number; sending such digital data to portable devices of the users in order to show these users the number served based on the number on the display.

In order to illustrate more clearly the innovative principles of the present invention and its advantages compared to the prior art, an example of embodiment applying these principles will be described below with the aid of the sole accompanying drawing.

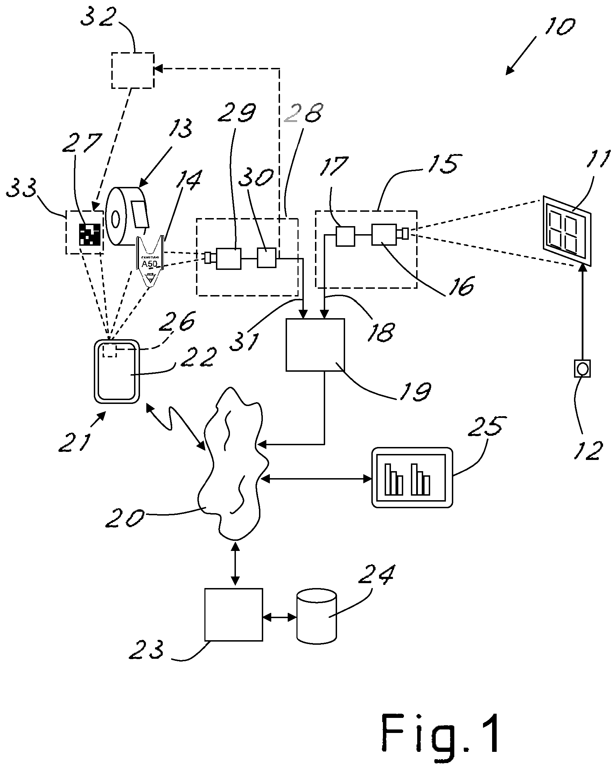

With reference to Figure 1, this shows in schematic form a queue management system designed in accordance with the invention and indicated overall by 10.

The system 10 comprises or is associated with a numerical display 11 which shows the number of the user served / to be served and which is controlled by means of one or more incremental pushbuttons 12 by means of which an operator increases manually the number shown on the display. The pushbutton 12 may be connected to the display by means of a wired or wireless connection, as is well known to the person skilled in the art.

A dispenser 13 may be provided in order to dispense in succession to the users the tickets 14 numbered in sequence. The dispenser 13 may be any type well known to the person skilled in the art and therefore will not be further shown or described in detail here. Such a dispenser may be for example a simple known housing containing a rolled-up strip of pre-printed tickets and operated for example by a mechanical lever for dispensing a ticket or by simply pulling the ticket from the strip projecting from the container.

Hitherto a simple known system for managing a queue has been described.

According to the invention, the innovative system described here comprises a sensor 15 suitable for digitally acquiring the number shown on the display 11. This sensor 15 may be referred to here as a served number sensor 15.

The sensor 15 acquires the number shown on the display 11 and emits digital data 18 corresponding digitally to the number shown on the display 11. The digital data 18 may be a predefined binary encoding of the number shown on the display 11. For example, it may be a binary number, with a suitable number of bits for being able to represent the maximum number which can shown on the display, and corresponding to the decimal number on the display.

The sensor 15 may be a per se known digital interface which is connected to the circuits of the display 11 in order to detect the display command signals for showing a number on the display and convert them into the digital data 18 which corresponds digitally to the number shown on the display.

Advantageously, the sensor 15 is however preferably designed so as not to have a physical connection with the display. In particular it may be formed by an optical sensor 16 (for example a camera) which is installed in order to capture the display 11 and by a per se known electronic unit 17 (for example comprising, or connected to, an OCR (optical character recognition) module), which receives the image captured by the optical sensor 16 and, depending on the image, obtains the digital data 18 which has been established in order to digitally represent the number present in the captured image.

The OCR module may be designed in any known manner, which may be easily imagined by the person skilled in the art. For example, it may be a known OCR hardware module or an OCR module formed by means of a per se known microprocessor system which has been suitably programmed.

The digital data 18 representing the number on the display 11 is passed to a per se known control unit 19 so as to be sent, via a communication network 20, to portable electronic devices 21 which are available to or owned by the users. The network 20 may be of any known type, wired or wireless. The connection between network and portable electronic devices 21 is instead advantageously of the wireless type (for example a local WIFI network or also then Internet network via a cellular wireless connection such as to avoid excessive distance-related constraints). Advantageously, the devices 21 may be a smartphone, tablet or other suitable known devices provided with a display 22 and means for accessing the network 20 and suitably programmed for receiving also the digital data 18 and showing on its display 22 the corresponding decimal number.

In this way, the user may know the number in the queue which has been reached, without being necessarily present at the location or in any case within viewing distance of the display 11.

The control unit 19 and the served number sensor 15 may form a single integrated local device for acquisition and remote transmission of the served number which is shown on the display 11. For example, they may be both inserted inside a small container to be arranged in the vicinity of the display.

Advantageously, the digital data 18 is also transmitted in a known and suitably programmed manner to a server 23, which may also process the data, store information in a database 24 and also supply information to an interface 25 (for example a terminal or a computer connected to the server or, preferably, to the network 20) for examination by an operator. The interface 25 may be for example a remote interface available to the system service providers or also to whoever is responsible for managing the service for which the users are queuing, as will be explained below.

The server 23 and/or the control unit 19 may also add further information to be sent to the portable devices 21 together with the digital data of the number shown on the display 11, as will become clear below.

The device 21 of a user may for example have installed a special program by means of which the user connects up to the system in order to view on the display 22 of the device the information produced by the system and associated with the display 11 of a queue which is of interest.

The system 10 may have several sensors 15 and several control units 19 for acquiring the information relating to several displays 11, and therefore several queues, which may also be spatially very distant from each other (for example at different counters in the same supermarket or also in different shops or also not connected together).

In order to allow in any case a user interested in a specific queue to signal to the system which queue he/she wants to receive information about, the device 21 of the user may enter into the system, automatically, manually or semi-automatically, an identifier of the specific queue in which the user is interested, such that the system may send the corresponding information to the user's portable device 21.

When a user takes a ticket from a dispenser the number on the ticket may also be stored electronically, such that it is then indicated on the portable device 21 of that user when the digital data 18 comes close to coinciding with the stored number by a predefined quantity (for example when there is a difference of a few units) such that the user may prepare to be served or to go to the service point for the queue in question. The user could also determine in each case the predefined quantity depending on how far he/she moves away from the queue while waiting for his/her number to become the served number. Using a portable device 21 provided with a localization feature (for example a known GPS system) it is also possible for the system to estimate the time needed for the user to return to the queue, and therefore the system could determine automatically and dynamically the aforementioned predefined quantity so as to send always sufficiently in advance to the portable device 21 the alert for the user to return to the queue.

It may be envisaged, for example, that the portable device of the user obtains automatically an identifier 27 of the queue from the control unit 19. In this way, when the user takes the number from the dispenser 13, the reception on the device of the number shown on the display for this queue may also be activated.

The identifier may be an electronic signal transmitted to the portable device, for example via a wireless transmission system in a local environment, namely with a reception area which is sufficiently limited so as not to interfere with similar transmission signals of other control devices 19 for other queues or also with transmission signals produced by the same device for different queues (in the case for example where several sensors 15 are connected to the same device 19). For example, the local transmission system may be a Bluetooth type transmission. An NFC system or the like which can be read by the device 21 (conveniently provided with a suitable NFC reader or the like) may also be used such that by simply moving the said device towards the identifier (identified by the user for example by means of a special sticker or display sign) assignment of the queue is obtained.

Preferably, the user may also be requested on the display of the device 21 to confirm the selection of the queue, in order to avoid incorrect or unsuitable assignment.

Alternatively or in addition, the identifier may also be an unencrypted printed code to be entered by the user via a keyboard with which the device 21 may be provided or to be captured by a camera of the device 21 in order to be read and acquired with a known OCR system.

Again in addition or alternatively, the identifier may be an optical code (for example a bar code or a QR code) which can be read by the reader 26 of the device. In such a case the reader 26 may comprise a suitable optical sensor (for example a camera or a dedicated scanner) integrated in the device 21 for acquiring the identification code. The queue identification code may be static (for example a sticker or a sign at the dispenser 13) or also dynamic for increasing the safety and preventing a user from adding queues which physically are not be made use of. The safety may also be ensured by combining logics which consider the position of the mobile device 2 and the queue.

In any case, if the dispenser for dispensing tickets 13 is present, the identifier 27 may be provided in the vicinity of or on the dispenser 13 or also directly on the tickets 14.

The queue identification code could also be incorporated in the ticket itself or automatically recovered by the application being executed on the mobile device when the ticket is captured in order to acquire the number (as will be explained below).

This identifier, in addition to an optical bar code or a QR code, may also be a colour/character or any other image-based distinguishable coded information.

Once a specific device 21 has detected the queue in which the user is interested, this data is sent to the queue control system (in particular, the server 23, if present, or the corresponding control unit 19) which stores it and which will send to the specific device 21 - until new settings are entered - the digital data and any further information associated with the chosen queue.

The user could also introduce into the system the number of his/her ticket, for example keying it in on the keyboard of the device 21.

In order to associate with the specific device 21 the number of a ticket which has been taken the optical sensor 26 of the device, or a similar sensor, may be used by the user in order to acquire the number on the ticket, without having to key it in. By using the direct ticket scanning system a user can be easily prevented from entering a wrong number or not being in possession of the corresponding ticket.

It is also possible to envisage an additional device 32 which acquires the number on the ticket using a taken number sensor 28 (for example via optical acquisition) and converts it into a form which may be more easily read by the mobile device 21. The converted form may include directly also the information relating to the associated queue, simplifying the recording of the user for a specific queue.

The converted form may be for example an optical form with QR code or bar code shown on a suitable screen 33 or may consist of a system for wireless transmission of the information using any known method (Bluetooth, NFC, etc.),

This may facilitate the recording of the number also by relatively simple devices 21.

The device 32 may be incorporated in the control unit 19 or may be an independent device to be placed in the vicinity of the ticket dispenser and may also have its own taken number sensor (for example a camera, for example comprising, or connected to, a module OCR) separate from that which may be connected to the control device 19.

In any case, once the number of the ticket has been introduced into the system it may also be envisaged that the system calculates the difference between the number on the display 11 and the number In the user's possession and alerts the user that it is getting close to his/her turn by sending a message on the associated device 21, if necessary taking into account the current position of the device 21, as mentioned above.

The system 10 may also optionally comprise a further sensor 28 for automatically detecting when a ticket 14 is taken and acquiring the corresponding sequential number. This sensor 28 may be referred to here as a taken number sensor.

The sensor 28 acquires the number on the ticket which has been taken and emits digital data 31 which corresponds digitally to the number on the ticket 14. The digital data 31 may be a predefined binary code of the number shown on the ticket. For example, it may be a binary number with a suitable number of bits for being able to represent the maximum decimal number present on a ticket. In the case where the ticket also comprises alphabetic characters, they may also be acquired and converted into digital data by the sensor 28.

The sensor 28 may advantageously comprise an optical sensor 29 (for example a camera) which is installed so as to record the emission of the tickets from the dispenser 13 and a per se known electronic unit 30 (for example an OCR module) which receives the image recorded by the optical sensor and obtains the digital data 31 which has been established to digitally represent the ticket number present in the recorded image.

In the same way as for the electronic unit or the OCR which may be used to acquire the served number, the unit 30 may also be realized in any known manner, which may be now easily imagined by the person skilled in the art. For example, it may be a known OCR hardware module or an OCR module formed by means of a microprocessor system which has been suitably programmed.

The digital data 31 is then also passed to the control unit 19 in order to be used together with the other information of the system. In this way, the control unit 19 and/or the server 23, if present, may know the numbers of the tickets taken by the users and therefore know the number of users in the queue and, if necessary, the distribution over time of the ticket taking operations.

All the data relating to taking of the tickets, the service time (i.e. the time taken by the served number on the display 11 to reach the number extracted from the dispenser), the distribution of the number extraction operations, any services requested by the users and the time bands involved, etc., may be stored by the server 23 in the database 24 and supplied on request to the interface(s) 25, for statistical, predictive and other purposes, as may be easily imagined by the person skilled in the art.

At this point it is clear how the objects of the invention have been achieved.

Owing to the system and the method according to the invention it is possible to use and/or supplement with advanced functions an already existing system for managing a queue based on a simple incremental display and optionally a dispenser of tickets in strip form.

For example, by simply installing the sensor 15 (and optionally the sensor 28) and the control unit 19 it is possible to add many advanced functions (such as the control and remote checking of the queues) also to a simple system which is already installed and operative with a numerical display 11 and paper-ticket dispenser 13.

Management of the system is simplified for the provider of the service for which the queue is formed, by using a conventional reel of pre-printed paper available for users, a simple counting display and a combined device with sensor 15 and control unit. The information shown on the display 11 may be manually aligned with the number of the first ticket on the reel at the start of the day, as occurs normally with the conventional system, with no further action being required. The system according to the invention will be automatically aligned by acquiring the number which appears on the display 11.

During operation of the system, users may take a paper ticket as per usual. If the users are in possession of a suitable device 21 (for example a smartphone or other personal device on which a specially designed program or app has been installed) they will be able to activate the viewing on their device of the served number shown on the display 11. Users may thus move out of the viewing range of the display 11 while waiting for their number to be shown, but monitor at all times on their device the number being served in that moment. This results in greater flexibility for management of the queue and less stress for the user.

Users may also optionally record their ticket numbers in the app (by keying it in or scanning the ticket) and also select the right queue, if there is more than one queue available. The system may also send to the devices of users suggestions depending on how close they are to a queue and/or thanks to a geolocalization system which may be present in the portable device 21.

By registering their number in the system, users can also receive notifications directly on their device 21 when their turn comes up. These notifications may be produced remotely by the system and sent to the device 21 or may also be produced by the device itself locally, depending on the data received for the number being served in that moment and the local knowledge which the device has of the number in the user's possession. The user may also easily obtain an estimate as to the service time.

The statistics regarding use of the service, the hourly distribution of the users in a queue, etc., may also be sent to the device 21 in order to allow a user to know what it is the best time or worst time for joining a queue.

The data recorded by the server 23 regarding use of the services associated with the various queues may also be used by the corresponding service providers to improve the said services and/or to send useful messages to users depending on their habits or queues formed. For example, users who often access queues in order to acquire particular products many be sent advertising material, special offers, etc, relating to these products.

With a system according to the invention a business manger is able to avoid the need to replace a simple conventional system, i.e. one which has only a numerical display and a paper-ticket dispenser, with a complex computerized system of the known type. As already mentioned above, it is merely required to install a device comprising the sensor 15 and the control unit 19 in order to obtain all the aforementioned advantages, without any added complications and high installation and management costs.

For example, shop owners may easily update their conventional system by acquiring or hiring the local device 15, 19 and, optionally the device 28, and registering with the service managed by the server 23 (which may manage several shops and local devices 15, 19, 28).

If need be, the manually controlled display used for management of the queues may also be used for the management of orders (e.g. for take-away food). Once a customer has placed an order and has received the sequential number (with or without a physical ticket) the customer will be informed by the system that the order is ready when the number of their order is shown on the display.

The shop owner who uses the system may also be alerted in real time regarding any problems and difficulties, such as too long a service time, system malfunctions, ticket reel nearly used up, etc.

Obviously the description given above of embodiments applying the innovative principles of the present invention is provided by way of example of these innovative principles and must therefore not be regarded as limiting the scope of the rights claimed herein.

For example, other sensors may be used in order to incorporate a display 11 of the pre-existing queue management system. For example, in addition to a direct interface with the display 11, it is possible to envisage associating each segment of the display 11 with a suitable photo-detector in order to realize the sensor 15.

If the dispenser 13 is of the more modern type and allows users to discard electronically reserved numbers via their own devices 21, "local" management of reservations by taking a physical ticket may also be combined with fully electronic reservation management where users do not need to obtain a physical ticket.

Finally, as clear by the above description, the sensor, or sensors, with camera can have the OCR function, or the processing of the digital data, carried out remotely, for example on a suitable server, so as to simplify the processing of the digital data in the local system. In this case, the local digital data can simply be a digital representation of the image taken by the camera for sending over a data network (such as the internet) for connection to the server.

## Claims

1. System for managing user queues, comprising at least:
- a served number sensor (15) intended for the acquisition of a number shown on a display (11) and representing the number served in the queue, the served number sensor (15) being suitable for digitally acquisition of the served number shown on the display (11) and for producing digital data (18) corresponding to such number;
- a control unit (19) connected to the served number sensor (15) in order to receive the digital data (18) from the served number sensor (15) and connected to a telecommunications network (20) for sending such digital data (18) to portable devices (21) of the users;
**characterized in that** the served number sensor (15) comprises:
- an optical sensor (16) intended to capture the image of the number shown on the display (11); and
- an electronic unit (17) which receives the image captured by the optical sensor (16) and obtains the digital data (18) which has been established to digitally represent the number present in the captured image.

2. System according to claim 1, **characterized in that** the optical sensor (16) is a camera.

3. System according to claim 1, **characterized in that** the telecommunications network comprises a wired or wireless network connected to the control unit (19) and a wireless connection between the wired or wireless network and the portable devices (21), said wireless connection can be advantageously a local WIFI network or an Internet network using a cellular wireless connection.

4. System according to claim 1, **characterized in that** it comprises a server (23) which receives the digital data (18) from one or more control units (19) through the telecommunication network (20) and is suitable to send such digital data to one or more portable devices (21) through the telecommunication network.

5. System according to claim 1, **characterized in that** it comprises at least one taken number sensor (28) which is suitable for the acquisition of a number present on a ticket (14) extracted from a ticket dispenser (13), the taken number sensor (28) being suitable for producing digital data (31) corresponding to this number and for sending it to the control unit (19).

6. System according to claim 5, **characterized in that** the taken number sensor (28) comprises:
- an optical sensor (29) intended to capture the image of the number present on a ticket (14) extracted from a ticket dispenser (13); and
- an electronic unit (30) which receives the image captured by the optical sensor (29) and the electronic unit (30) being suitable to produce the digital data (31) which has been established to digitally represent the number present in the captured image.

7. System according to claim 6, **characterized in that** the optical sensor (29) is a camera.

8. System according to claim 4, **characterized in that** it comprises an identifier (27) which is associated with a display (11) and which is suitable to be send from a portable device (21) to the server (23) to signal to the server (23) of which control unit (19) the digital data (18) must be sent to the portable device (21) through the telecommunication network.

9. System according to claim 8, **characterized in that** the identifier (27) is an optical code and/or a local wireless signal intended to be acquired by a portable device (21) and transmitted to the server (23) through the telecommunication network.

10. System according to claim 5, **characterized in that** the taken number sensor (28) is connected to a device (32) able to encode the taken number into a form suitable for acquisition by the portable devices (21), possibly together with additional information, the form suitable for acquisition by the portable devices (21) being an optical rform with QR code or barcode shown an a display (33) or a wireless communication of information.

11. Method for managing user queues with a system according to any one of the previous claims, comprising the steps of:
- acquiring with the served number sensor (15) a number shown on a display (11) and representing the number served in the queue ;
- producing with the served number sensor (15) the digital data (18) corresponding to such number;
- sending such digital data (18) to portable devices (21) of the users through the telecommunication network in order to allow the portable devices (21) to show to the users the number served based on the number on the display (11).

12. Method according to claim 11, **characterized by** using a dispenser (13) for dispensing tickets (14) having a sequential number that will be served when the number on the display corresponds to this sequential number and, when a user takes a ticket (14) from the dispenser (13), electronically storing the number present on the ticket and signalling on the portable device (21) of that user when the digital data (18) approaches the stored number by a predetermined quantity.

13. Method according to claim 12, **characterized in that**, for electronically storing the number on the ticket, is used a taken number sensor (28) executing the step of acquiring the number present on the taken ticket for its electronic storage.

14. Method according to claim 11, **characterized by** providing an identifier (27) for allowing the user to signal by means of the portable device (21) the queue which is of interest from among a plurality of queues each with a display (11) representing the number served for that queue, so as to send the digital data (18) of the number served for that queue to the portable device (21) of that user.

## Patentansprüche

1. System zur Verwaltung von Benutzerwarteschlangen, umfassend mindestens:
- einen Sensor (15) für bediente Nummern, der für die Erfassung einer auf einer Anzeige (11) angezeigten Nummer bestimmt ist und die in der Warteschlange bediente Nummer darstellt, wobei der Sensor (15) für bediente Nummern geeignet ist, die auf der Anzeige (11) angezeigte bediente Nummer digital zu erfassen und digitale Daten (18) zu erzeugen, die einer solchen Nummer entsprechen;
- eine Steuereinheit (19), die mit dem Sensor (15) für bediente Nummern verbunden ist, um die digitalen Daten (18) von dem Sensor (15) für bediente Nummern zu empfangen, und die mit einem Telekommunikationsnetzwerk (20) verbunden ist, um solche digitalen Daten (18) an tragbare Vorrichtungen (21) der Benutzer zu senden;
**dadurch gekennzeichnet, dass** der bediente Nummernsensor (15) Folgendes umfasst:
- einen optischen Sensor (16), der dazu bestimmt ist, das Bild der auf der Anzeige (11) gezeigten Zahl zu erfassen; und
- eine elektronische Einheit (17), die das von dem optischen Sensor (16) aufgenommene Bild empfängt und die digitalen Daten (18) erhält, die zur digitalen Darstellung der in dem aufgenommenen Bild vorhandenen Zahl erstellt wurden.

2. System nach Anspruch 1, **dadurch gekennzeichnet, dass** der optische Sensor (16) eine Kamera ist.

3. System nach Anspruch 1, **dadurch gekennzeichnet, dass** das Telekommunikationsnetzwerk ein mit der Steuereinheit (19) verbundenes drahtgebundenes oder drahtloses Netzwerk und eine drahtlose Verbindung zwischen dem drahtgebundenen oder drahtlosen Netzwerk und den tragbaren Vorrichtungen (21) umfasst, wobei die drahtlose Verbindung vorteilhafterweise ein lokales WIFI-Netzwerk oder ein Internetnetzwerk unter Verwendung einer drahtlosen Mobilfunkverbindung sein kann.

4. System nach Anspruch 1, **dadurch gekennzeichnet, dass** es einen Server (23) umfasst, der die digitalen Daten (18) von einer oder mehreren Steuereinheiten (19) über das Telekommunikationsnetzwerk (20) empfängt und geeignet ist, solche digitalen Daten an eine oder mehrere tragbare Vorrichtungen (21) über das Telekommunikationsnetzwerk zu senden.

5. System nach Anspruch 1, **dadurch gekennzeichnet, dass** es mindestens einen Sensor (28) für entnommene Nummern umfasst, der geeignet ist, eine auf einer aus einem Fahrkartenautomaten (13) entnommenen Fahrkarte (14) vorhandene Nummer zu erfassen, wobei der Sensor für entnommene Nummern (28) geeignet ist, digitale Daten (31) zu erzeugen, die dieser Nummer entsprechen, und sie an die Steuereinheit (19) zu senden.

6. System nach Anspruch 5, **dadurch gekennzeichnet, dass** der Sensor für entnommene Nummern (28) Folgendes umfasst:
- einen optischen Sensor (29), der dazu bestimmt ist, das Bild der Nummer auf einer Fahrkarte (14) zu erfassen, die aus einem Fahrkartenautomaten (13) entnommen wird; und
- eine elektronische Einheit (30), die das von dem optischen Sensor (29) aufgenommene Bild empfängt, wobei die elektronische Einheit (30) geeignet ist, die digitalen Daten (31) zu erzeugen, die eingerichtet wurden, um die in dem aufgenommenen Bild vorhandene Zahl digital darzustellen.

7. System nach Anspruch 6, **dadurch gekennzeichnet, dass** der optische Sensor (29) eine Kamera ist.

8. System nach Anspruch 4, **dadurch gekennzeichnet, dass** es einen Identifikator (27) umfasst, der einer Anzeige (11) zugeordnet ist und der geeignet ist, von einer tragbaren Vorrichtung (21) an den Server (23) gesendet zu werden, um dem Server (23) zu signalisieren, von welcher Steuereinheit (19) die digitalen Daten (18) über das Telekommunikationsnetzwerk an die tragbare Vorrichtung (21) gesendet werden müssen.

9. System nach Anspruch 8, **dadurch gekennzeichnet, dass** der Identifikator (27) ein optischer Code und/oder ein lokales drahtloses Signal ist, das dazu bestimmt ist, von einer tragbaren Vorrichtung (21) erfasst und über das Telekommunikationsnetzwerk an den Server (23) übertragen zu werden.

10. System nach Anspruch 5, **dadurch gekennzeichnet, dass** der Sensor für entnommene Nummern (28) mit einer Vorrichtung (32) verbunden ist, die in der Lage ist, die entnommene Nummer in eine Form zu codieren, die für die Erfassung durch die tragbaren Vorrichtungen (21) geeignet ist, möglicherweise zusammen mit zusätzlichen Informationen, wobei die für die Erfassung durch die tragbaren Vorrichtungen (21) geeignete Form eine optische rForm mit QR-Code oder Barcode ist, die auf einer Anzeige (33) oder einer drahtlosen Informationsübertragung gezeigt wird.

11. Verfahren zur Verwaltung von Benutzerwarteschlangen mit einem System nach einem der vorstehenden Ansprüche, umfassend die folgenden Schritte:
- Erfassen einer auf einer Anzeige (11) angezeigten Zahl, die die Anzahl der bedienten Personen in der Warteschlange darstellt, mit dem Sensor für bediente Nummern (15);
- Erzeugen der dieser Nummer entsprechenden digitalen Daten (18) mit dem Sensor (15) für die bediente Nummer;
- Senden solcher digitaler Daten (18) an tragbare Vorrichtungen (21) der Benutzer über das Telekommunikationsnetzwerk, um den tragbaren Vorrichtungen (21) zu ermöglichen, den Benutzern die servierte Zahl basierend auf der Zahl auf der Anzeige (11) zu zeigen.

12. Verfahren nach Anspruch 11, **dadurch gekennzeichnet, dass** ein Automat (13) zur Ausgabe von Fahrkarten (14) mit einer fortlaufenden Nummer verwendet wird, die bedient werden, wenn die Nummer auf der Anzeige dieser fortlaufenden Nummer entspricht, und dass, wenn ein Benutzer eine Fahrkarte (14) aus dem Automaten (13) nimmt, die auf der Fahrkarte vorhandene Nummer elektronisch gespeichert wird und auf der tragbaren Vorrichtung (21) dieses Benutzers signalisiert wird, wenn sich die digitalen Daten (18) der gespeicherten Nummer um eine vorbestimmte Menge nähern.

13. Verfahren nach Anspruch 12, **dadurch gekennzeichnet, dass** zur elektronischen Speicherung der Nummer auf der Fahrkarte ein Sensor für entnommene Nummern (28) verwendet wird, der den Schritt des Erfassens der auf der entnommenen Fahrkarte vorhandenen Nummer für deren elektronische Speicherung ausführt.

14. Verfahren nach Anspruch 11, **dadurch gekennzeichnet, dass** ein Identifikator (27) bereitgestellt wird, der es dem Benutzer ermöglicht, mittels der tragbaren Vorrichtung (21) die Warteschlange von Interesse aus einer Vielzahl von Warteschlangen zu signalisieren, wobei jede mit einer Anzeige (11) versehen ist, die die für diese Warteschlange bediente Zahl darstellt, um die digitalen Daten (18) der für diese Warteschlange bedienten Zahl an die tragbare Vorrichtung (21) dieses Benutzers zu senden.

## Revendications

1. Système de gestion de files d'attente d'utilisateurs, comprenant au moins :
- un capteur de numéro servi (15) destiné à l'acquisition d'un numéro affiché sur un écran (11) et représentant le numéro servi dans la file d'attente, le capteur de numéro servi (15) étant adapté à l'acquisition numérique du numéro servi affiché sur l'écran (11) et à la production de données numériques (18) correspondant à ce numéro ;
- une unité de commande (19) connectée au capteur de numéro servi (15) afin de recevoir les données numériques (18) du capteur de numéro servi (15) et connectée à un réseau de télécommunications (20) pour envoyer de telles données numériques (18) aux appareils portables (21) des utilisateurs ;
**caractérisé en ce que** le capteur de numéro servi (15) comprend :
- un capteur optique (16) destiné à capturer l'image du numéro affiché sur l'écran (11) ; et
- une unité électronique (17) qui reçoit l'image capturée par le capteur optique (16) et obtient les données numériques (18) qui ont été établies pour représenter numériquement le nombre présent dans l'image capturée.

2. Système selon la revendication 1, **caractérisé en ce que** le capteur optique (16) est une caméra.

3. Système selon la revendication 1, **caractérisé en ce que** le réseau de télécommunication comprend un réseau filaire ou sans fil connecté à l'unité de commande (19) et une connexion sans fil entre le réseau filaire ou sans fil et les dispositifs portables (21), ladite connexion sans fil pouvant être avantageusement un réseau WIFI local ou un réseau Internet utilisant une connexion sans fil cellulaire.

4. Système selon la revendication 1, **caractérisé en ce qu'**il comprend un serveur (23) qui reçoit les données numériques (18) d'une ou de plusieurs unités de commande (19) à travers le réseau de télécommunication (20) et est adapté pour envoyer de telles données numériques à un ou plusieurs dispositifs portables (21) à travers le réseau de télécommunication.

5. Système selon la revendication 1, **caractérisé en ce qu'**il comprend au moins un capteur de numéro prélevé (28) adapté à l'acquisition d'un numéro présent sur un ticket (14) extrait d'un distributeur de tickets (13), le capteur de numéro prélevé (28) étant adapté à produire des données numériques (31) correspondant à ce numéro et à les envoyer à l'unité de commande (19).

6. Système selon la revendication 5, **caractérisé en ce que** le capteur de numéro prélevé (28) comprend :
- un capteur optique (29) destiné à capturer l'image du numéro présent sur un ticket (14) extrait d'un distributeur de tickets (13) ; et
- une unité électronique (30) qui reçoit l'image capturée par le capteur optique (29) et l'unité électronique (30) étant apte à produire les données numériques (31) qui ont été établies pour représenter numériquement le numéro présent dans l'image capturée.

7. Système selon la revendication 6, **caractérisé en ce que** le capteur optique (29) est une caméra.

8. Système selon la revendication 4, **caractérisé en ce qu'**il comprend un identifiant (27) qui est associé à un affichage (11) et qui est apte à être envoyé d'un dispositif portable (21) au serveur (23) pour signaler au serveur (23) de quelle unité de commande (19) les données numériques (18) doivent être envoyées au dispositif portable (21) à travers le réseau de télécommunication.

9. Système selon la revendication 8, **caractérisé en ce que** l'identifiant (27) est un code optique et/ou un signal local sans fil destiné à être acquis par un dispositif portable (21) et transmis au serveur (23) à travers le réseau de télécommunication.

10. Système selon la revendication 5, **caractérisé en ce que** le capteur de numéro prélevé (28) est connecté à un dispositif (32) capable de coder le numéro prélevé sous une forme adaptée à l'acquisition par les dispositifs portables (21), éventuellement avec des informations supplémentaires, la forme adaptée à l'acquisition par les dispositifs portables (21) étant une forme optique avec code QR ou code-barres affiché sur un écran (33) ou une communication sans fil d'informations.

11. Procédé de gestion de files d'attente d'utilisateurs avec un système selon l'une quelconque des revendications précédentes, comprenant les étapes suivantes :
- l'acquisition avec le capteur de numéro servi (15) d'un numéro affiché sur un écran (11) et représentant le numéro servi dans la file d'attente ;
- la production avec le capteur de numéro servi (15) des données numériques (18) correspondant à ce numéro ;
- l'envoi de telles données numériques (18) à des dispositifs portables (21) des utilisateurs à travers le réseau de télécommunication afin de permettre aux dispositifs portables (21) d'afficher aux utilisateurs le numéro servi sur la base du numéro sur l'écran (11).

12. Procédé selon la revendication 11, **caractérisé par** l'utilisation d'un distributeur (13) pour distribuer des tickets (14) ayant un numéro séquentiel qui sera servi lorsque le numéro sur l'écran correspond à ce numéro séquentiel et, lorsqu'un utilisateur prend un ticket (14) du distributeur (13), le stockage électronique du numéro présent sur le ticket et le signalement sur le dispositif portable (21) de cet utilisateur lorsque les données numériques (18) s'approchent du numéro stocké d'une quantité prédéterminée.

13. Procédé selon la revendication 12, **caractérisé en ce que**, pour stocker électroniquement le numéro sur le ticket, on utilise un capteur de numéro prélevé (28) exécutant l'étape d'acquisition du numéro présent sur le ticket prélevé pour son stockage électronique.

14. Procédé selon la revendication 11, **caractérisé par** la fourniture d'un identifiant (27) pour permettre à l'utilisateur de signaler au moyen du dispositif portable (21) la file d'attente à laquelle on s'intéresse parmi une pluralité de files d'attente, chacune avec un écran (11) représentant le numéro servi pour cette file d'attente, de manière à envoyer les données numériques (18) du numéro servi pour cette file d'attente au dispositif portable (21) de cet utilisateur.
